# EUROPEAN PATENT SPECIFICATION

(11) **EP 4 205 864 B1**
(45) Date of publication and mention of the grant of the patent: **28.05.2025**
(21) Application number: 21861470.9
(22) Date of filing: 23.08.2021
(51) Int. Cl.: B05D 3/02, B05D 7/24, C09D 4/00, C09D 163/02, C09D 7/63

(54) **LOW VOC PAINT COMPOSITION, COATING FILM, AND BASE MATERIAL WITH COATING FILM, AND METHODS FOR PRODUCING THESE**
VOC-ARME LACKZUSAMMENSETZUNG, BESCHICHTUNGSFILM UND BASISMATERIAL MIT BESCHICHTUNGSFILM SOWIE VERFAHREN ZU IHRER HERSTELLUNG
COMPOSITION DE PEINTURE À FAIBLE TENEUR EN COV, FILM DE REVÊTEMENT, ET MATÉRIAU DE BASE COMPRENANT UN FILM DE REVÊTEMENT, ET PROCÉDÉS DE PRODUCTION DE CEUX-CI

(30) Priority: 26.08.2020 JP 2020142946
(43) Date of publication of application: 05.07.2023
(73) Proprietor: Chugoku Marine Paints, Ltd., Hiroshima 739-0652 (JP)
(72) Inventor: OKADA, Masamitsu, Otake-shi, Hiroshima 739-0652 (JP); NIIMOTO, Jyunji, Otake-shi, Hiroshima 739-0652 (JP)
(74) Representative: Hoffmann Eitle
(86) International application number: PCT/JP2021/030736
(87) International publication number: WO 2022/045044

(56) References cited:
- JP-A- 2001 220 542
- JP-A- 2001 521 949
- JP-A- 2003 183 569
- JP-A- 2008 517 106
- JP-A- 2010 523 731
- JP-A- 2017 536 438
- JP-A- H08 508 266
- US-A1- 2020 172 723
- US-B2- 9 150 709

## Description

### Technical Field

An embodiment of the present invention relates to a low-VOC coating composition, a coating film or a substrate with a coating film, or a production method therefor.

### Background Art

Conventionally, low-VOC (volatile organic compound) epoxy coating compositions have been investigated that excel in, for example, oil resistance, solvent resistance, chemical resistance, and anticorrosion property. In order to obtain a suitable coating material viscosity, benzyl alcohol-containing coating compositions (e.g., Non Patent Literature 1) are mainly used.

Benzyl alcohol is miscible with a reactive component, and is blended in a base component or blended in a commercially available amine curing agent in advance from the viewpoint of, for example, a diluting action and/or a viscosity decreasing effect (e.g., Patent Literatures 1 and 2). Patent Literature 3 discloses epoxy systems comprising epoxy resins having an epoxy equivalent weight of less than 200, an amine curing agent and a 2-oxo-[1,3]dioxolane derivative.

### Citation List

### Patent Literature

Patent Literature 1: JP 2007-308559 A
Patent Literature 2: JP 2018-100397 A Patent Literature 3: US 9150709 B2

### Non Patent Literature

Non Patent Literature 1: Shinichiro Tame, "Trends in Anticorrosive Coating Materials", DNT Technical Report on Coatings, DAI NIPPON TORYO CO., LTD., October 2012, No. 12, pp. 28-33

### Summary of Invention

### Technical Problem

Benzyl alcohol is generally regarded as a chemical substance having low volatility and lower toxicity than other organic solvents. However, according to the GHS classification, benzyl alcohol is classified into class 4: acute toxicity (oral), class 4: acute toxicity (dermal), and class 3: acute toxicity (inhalation: vapor). Thus, health hazards have been noted.

Therefore, when the effects on the environment and human body are taken into consideration, a benzyl alcohol-free coating composition has been sought. Meanwhile, no benzyl alcohol may be blended in a base component. In this case, it is difficult to obtain a composition having appropriate fluidity. Accordingly, coating application such as airless spray coating application has been found to be difficult.

In addition, benzyl alcohol-free amine curing agents are also commercially available. Such a commercially available product may be used to provide a composition that can form a coating film with, for example, excellent oil resistance, solvent resistance, chemical resistance, and anticorrosion property. In this case, unfortunately, the composition has been found to have a problem of film formability at low temperatures (e.g., 10°C or lower).

An embodiment of the present invention provides a low-VOC coating composition that excels in film formability at low temperatures and can form a coating film with excellent oil resistance, solvent resistance, chemical resistance, and anticorrosion property even though the composition is substantially free of benzyl alcohol.

### Solution to Problem

The present inventors have conducted intensive research on a solution to the problem and as a result, have found that the problem can be solved by a specific coating composition. Then, the present invention has been completed.

The configuration examples of the present invention are as follows.
<1> A low-VOC (volatile organic compound) coating composition substantially free of benzyl alcohol, including:
   a bisphenol epoxy compound (A) having an epoxy equivalent of 200 or less;
   a liquid amine curing agent (B); and
   a dioxolane derivative (C) represented by the following formula (1). 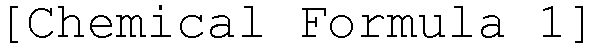 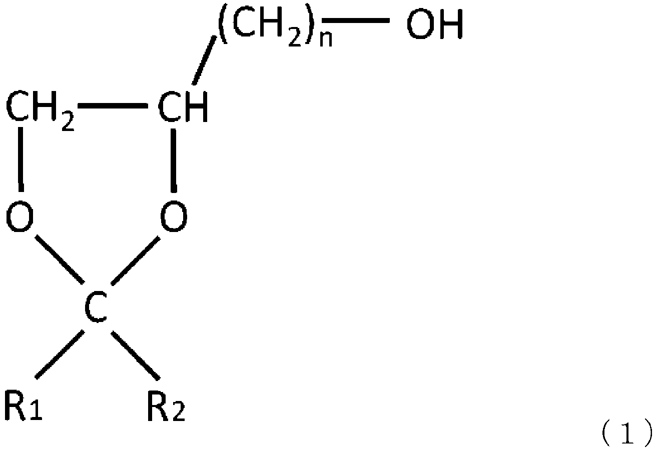 [wherein R₁ and R₂ are each independently a hydrogen atom, an alkyl group, an alkenyl group, or a phenyl group, and n is 1, 2, 3, 4, or 5.]
<2> The coating composition according to <1>, wherein the liquid amine curing agent (B) includes at least one compound selected from methylene-crosslinked poly(cyclohexyl-aromatic)amine (MPCA), 4,4'-methylenebis(cyclohexylamine) (PACM), and Mannich modified products of m-xylylenediamine (MXDA).
<3> The coating composition according to <1> or <2>, wherein content of the dioxolane derivative (C) is from 1 to 14 mass% based on 100 mass% of nonvolatile content in the coating composition.
<4> The coating composition according to any one of <1> to <3>, wherein content of the dioxolane derivative (C) is from 0.1 to 1.4 parts by mass based on 1 part by mass of content of the liquid amine curing agent (B).
<5> The coating composition according to any one of <1> to <4>, wherein the VOC content is 200 g/L or less.
<6> The coating composition according to any one of <1> to <5>, further including a reactive diluent other than the epoxy compound (A).
<7> A coating film formed from the coating composition according to any one of <1> to <6>.
<8> A method for producing a coating film, including a step of drying the coating composition according to any one of <1> to <6> at a temperature of 10°C or lower to form a coating film.
<9> A substrate with a coating film including the coating film according to <7> and a substrate.
<10> A method for producing a substrate with a coating film, including the following steps [1] and [2]:
   the step [1] of applying the coating composition according to any one of <1> to <6> to a substrate; and
   the step [2] of drying the applied coating composition to form a coating film.
<11> The substrate with a coating film production method according to <10>, wherein the step [2] is a step of drying the applied coating composition at a temperature of 10°C or lower to form a coating film.

### Advantageous Effects of Invention

An embodiment of the present invention makes it possible to provide a low-VOC (i.e., rich in nonvolatile component content and substantially free of any volatile organic compound) coating composition that excels in film formability at low temperatures and can form a coating film with excellent oil resistance, solvent resistance, chemical resistance, and anticorrosion property even though the composition is substantially free of benzyl alcohol.

According to an embodiment of the present invention, a coating film having the above-mentioned excellent various properties can be formed. Therefore, the coating film can be suitably used for various substrates, in particular, usage for coating application the inner surface of a tank used for transporting or storing, for example, each chemical substance.

In addition, an embodiment of the present invention makes it possible to produce a coating composition excellent in coating workability, particularly spray coating workability while having low VOC. Therefore, a coating film can be easily formed even on a large-area substrate without affecting the environment and human body.

Here, the wording "excellent oil resistance, solvent resistance, and chemical resistance" specifically means excellent resistance to, for example, oils (e.g., heavy oil, gasoline, naphtha, palm oil), solvents (e.g., methanol, ethanol, xylene, benzene, methyl isobutyl ketone, 1,2-dichloroethane, ethyl acetate), and chemicals (e.g., sodium hydroxide, sulfuric acid).

Since these oils, solvents, and chemicals significantly affect coating films, it is considered that the coating film having resistance to these oils, solvents, and chemicals is resistant to common oils, solvents, and chemicals.

### Brief Description of Drawing

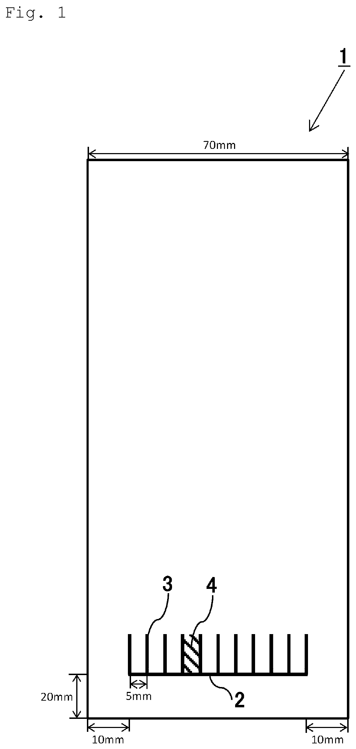

Fig. 1 is a schematic view of a notched test plate used for an anticorrosion test in Examples.

### Description of Embodiments

### <<Low-VOC Coating Composition>>

A low-VOC coating composition (hereinafter, also referred to as the "present composition") according to an embodiment of the present invention is substantially free of benzyl alcohol and contains a bisphenol epoxy compound (A) (bisphenol-type epoxy compound (A)) having an epoxy equivalent of 200 or less, a liquid amine curing agent (B), and a dioxolane derivative (C) represented by the following formula (1): 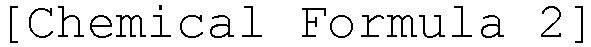 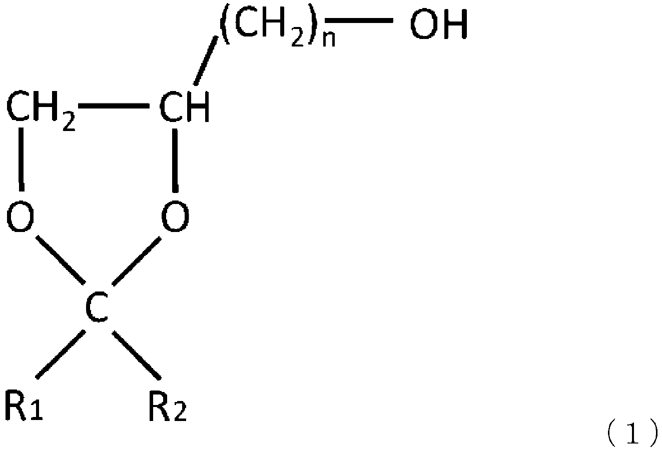 [wherein R₁ and R₂ are each independently a hydrogen atom, an alkyl group, an alkenyl group, or a phenyl group, and n is 1, 2, 3, 4, or 5.]

Note that it is particularly important to prevent corrosion of a substrate. Thus, a preferable example of the present composition is an "anticorrosive coating composition", but the present composition is not limited to a composition used only for imparting anticorrosion property to the substrate. Examples of an embodiment of the present composition include: a composition used for imparting, for instance, oil resistance, solvent resistance, and chemical resistance to a substrate; or an adhesive for bonding one substrate to another substrate.

The present composition may be a one-component type composition, but is usually a two-component type composition including a base component containing the epoxy compound (A) and a curing agent component containing the amine curing agent (B). If necessary, the present composition may also be a three or more-component type composition.

The base component and the curing agent component are usually, for example, preserved, stored, and transported in separate containers, and then used by being mixed together immediately before use.

In the present invention, the wording "substantially free of benzyl alcohol" means that benzyl alcohol is not consciously blended in the present composition and that a consciously benzyl alcohol-containing raw material is not consciously used. Specifically, the wording means that the content of benzyl alcohol in the present composition is 0.5 mass% or less.

As used herein, the term "low-VOC" means that the present composition contains almost no VOC such as an organic solvent. Specifically, the VOC content in the present composition when the viscosity is adjusted to a viscosity suitable for coating application is preferably 200 g/L or less, more preferably 170 g/L or less, and still more preferably 150 g/L or less.

Note that as used herein, the term "organic solvent" (solvent that can be blended in a composition) refers to an organic compound other than the dioxolane derivative (C) and having a boiling point at 1 atm of less than 200°C.

The VOC content of the present composition may be calculated from the following formula (2) by using the values of the following specific gravity and mass NV of the coating material: VOC content (g/L) = Coating material specific gravity × 1000 × (100 - mass NV)/100

Coating material specific gravity (g/cm³): a value calculated by filling a specific gravity cup having an internal volume of 100 ml with the present composition (e.g., a composition obtained immediately after a base component and a curing agent component are mixed) under a temperature condition of 23°C, and then measuring the mass of the composition.

Mass NV (mass%): a mass percentage (content of heating residue (mass NV) in the present composition) calculated by weighing 1 g of the present composition (e.g., a composition obtained immediately after a base component and a curing agent component are mixed) in a flat bottom dish, uniformly spreading the composition while using a wire with a known mass, leaving the composition at 23°C for 24 hours, drying the composition at 110°C for 1 hour, and then weighing the mass of the heating residue (also referred to as "nonvolatile content") and the wire.

Note that as used herein, a component(s) other than an organic solvent and a dispersion medium contained in each of a raw material (e.g., the epoxy compound (A)) constituting a base component or a curing agent component, the base component, and the curing agent component is referred to as "solid content".

### <Epoxy Compound (A)>

Examples of the epoxy compound (A) include: a polymer or oligomer having a bisphenol structure in the molecule and containing two or more epoxy groups; or a polymer or oligomer produced by a ring-opening reaction of the epoxy groups.

Such an epoxy compound (A) may be used together with specific (B) and (C) to give a low-VOC composition with excellent coating workability. Further, this composition may be used to form a coating film with excellent oil resistance, solvent resistance, chemical resistance, and anticorrosion property.

One kind of the epoxy compound (A) may be used, or two or more kinds thereof may be used.

The epoxy equivalent of the epoxy compound (A) is 200 or less, preferably from 100 to 200, and more preferably from 100 to 190 because it is possible to form a coating film with, for example, excellent oil resistance, solvent resistance, chemical resistance, and anticorrosion property. Note that the epoxy equivalent is calculated based on JIS K 7236:2001.

An epoxy compound having an epoxy equivalent of more than 200 has an excessively large molecular weight. Thus, use of such an epoxy compound often results in a case where an organic solvent is required in order to adjust the viscosity to an appropriate viscosity for coating application. Consequently, there is a tendency that a low-VOC coating composition cannot be easily obtained.

The epoxy compound (A) is preferably an epoxy compound that is liquid at room temperature. Specific examples thereof include a bisphenol A-type epoxy resin, a bisphenol F-type epoxy resin, or a bisphenol AD-type epoxy resin.

As the epoxy compound (A), a commercially available product may be used. Examples of the commercially available product include: "E-028", a bisphenol A-type epoxy resin (epoxy equivalent: 180 to 190; solid content: 100%; manufactured by OHTAKE-MEISHIN CHEMICAL, CO., LTD.); or "jER 807", a bisphenol F-type epoxy resin (epoxy equivalent: 160 to 175; solid content: 100%; manufactured by Mitsubishi Chemical Corporation).

The viscosity of the epoxy compound (A) at 25°C as measured with an E-type viscometer (FMD type; manufactured by TOKIMEC INC.) is preferably 1,500 mPa·s or larger and more preferably 3,000 mPa·s or larger, and preferably 120,000 mPa·s or less and more preferably 30,000 mPa·s or less.

From the viewpoint of, for example, an ability to easily form a coating film with, for instance, excellent adhesion to a substrate and excellent oil resistance, solvent resistance, chemical resistance, and anticorrosion property, the content of the epoxy compound (A) in the present composition is preferably 10 mass% or larger and more preferably 15 mass% or larger, and preferably 50 mass% or less and more preferably 45 mass% or less based on 100 mass% of the nonvolatile content in the present composition.

### <Curing Agent (B)>

The curing agent (B) is not particularly limited as long as the curing agent is a liquid amine curing agent. Specifically, preferred is an amine compound such as an aliphatic, alicyclic, aromatic, or heterocyclic amine compound. Note that these amine compounds are distinguished by the type of an amino group-bonded carbon. For example, the aliphatic amine curing agent refers to a compound having at least one amino group bonded to aliphatic carbon.

One kind of the curing agent (B) may be used, or two or more kinds thereof may be used.

Meanwhile, that the curing agent (B) is "liquid" means that the viscosity measured with an E-type viscometer at 25°C is 1,000 Pa·s or less.

Use of such a curing agent (B) allows for a decrease in the volume of organic solvent for adjusting the viscosity to an appropriate coating viscosity. This makes it possible to easily produce a coating composition having a low VOC content and excellent coating workability.

Examples of the aliphatic amine curing agent include an alkylene polyamine, a polyalkylene polyamine, or an alkylaminoalkylamine.

Examples of the alkylene polyamine include a compound represented by the formula: "H₂N-R¹-NH₂" (R¹ is a C₁₋₁₂ divalent hydrocarbon group). Specific examples include methylenediamine, ethylenediamine, 1,2-diaminopropane, 1,3-diaminopropane, 1,5-diaminopentane, 1,6-diaminohexane, or trimethylhexamethylenediamine.

Examples of the polyalkylene polyamine include a compound represented by the formula: "H₂N-(CₘH₂ₘNH)ₙH" (m is an integer of 1 to 10. n is an integer of 2 to 10 and is preferably an integer of 2 to 6). Specific examples include diethylenetriamine, dipropylenetriamine, triethylenetetramine, tripropylenetetramine, tetraethylenepentamine, tetrapropylenepentamine, pentaethylenehexamine, nonaethylenedecamine, or triethylene-bis(trimethylene)hexamine.

Examples of the alkylaminoalkylamine include a compound represented by the formula: "R²₂N-(CH₂)ₚ-NH₂" (each R² is independently a hydrogen atom or a C₁₋₈ alkyl group (provided that at least one R² is a C₁₋₈ alkyl group), and p is an integer of 1 to 6). Specific examples include dimethylaminoethylamine, diethylaminoethylamine, dibutylaminoethylamine, dimethylaminopropylamine, diethylaminopropylamine, dipropylaminopropylamine, dibutylaminopropylamine, or dimethylaminobutylamine.

Examples of the aliphatic amine curing agent other than these include tetra(aminomethyl)methane, tetrakis(2-aminoethylaminomethyl)methane, 1,3-bis(2'-aminoethylamino)propane, tris(2-aminoethyl)amine, bis(cyanoethyl)diethylenetriamine, polyoxyalkylene polyamine (in particular diethylene glycol bis(3-aminopropyl)ether), bis(aminomethyl)cyclohexane, isophoronediamine (IPDA), menthanediamine (MDA), o-xylylenediamine, m-xylylenediamine (MXDA), p-xylylenediamine, bis(aminomethyl)naphthalene, bis(aminoethyl)naphthalene, 1,4-bis(3-aminopropyl)piperazine, 1-(2'-aminoethylpiperazine), or 1-[2'-(2"-aminoethylamino)ethyl]piperazine.

Specific examples of the alicyclic amine curing agent include cyclohexanediamine, diaminodicyclohexylmethane (in particular, 4,4'-methylenebis(cyclohexylamine) [PACM]), 4,4'-isopropylidenebiscyclohexylamine, norbornanediamine, or 2,4-di(4-aminocyclohexylmethyl)aniline.

Examples of the aromatic amine curing agent include an aromatic polyamine compound having two or more primary amino groups bonded to an aromatic ring such as a benzene ring or a naphthalene ring.

Specific examples of this aromatic amine curing agent include phenylenediamine, naphthalenediamine, diaminodiphenylmethane, 2,2-bis(4-aminophenyl)propane, 4,4'-diaminodiphenyl ether, 4,4'-diaminobenzophenone, 4,4'-diaminodiphenylsulfone, 3,3'-dimethyl-4,4'-diaminodiphenylmethane, diaminodiethylphenylmethane, 2,4'-diaminobiphenyl, 2,3'-dimethyl-4,4'-diaminobiphenyl, or 3,3'-dimethoxy-4,4'-diaminobiphenyl.

Specific examples of the heterocyclic amine curing agent include 1,4-diazacycloheptane, 1,11-diazacycloeicosane, or 1,15-diazacyclooctacosane.

Examples of the curing agent (B) further include a modified product of the amine curing agent described above, such as a fatty acid modified product such as polyamidoamine, an amine adduct with an epoxy compound, a Mannich modified product (e.g., phenalkamine, phenalkamide), a Michael adduct product, ketimine, or aldimine.

From the viewpoint of, for example, an ability to easily form a coating film with, for instance, excellent oil resistance, solvent resistance, chemical resistance, and anticorrosion property, the curing agent (B) preferably contains at least one compound selected from methylene-crosslinked poly(cyclohexyl-aromatic)amine (MPCA), 4,4'-methylenebis(cyclohexylamine) (PACM), and Mannich modified products of m-xylylenediamine (MXDA).

In addition, from the viewpoint of, for example, an ability to easily form a coating film with excellent film formability and anticorrosion property, the curing agent (B) used is preferably an aliphatic polyamine (e.g., "Ancamine 2738", "Ancamine 2089K", both manufactured by Air Products & Chemicals, Inc.). From the viewpoint of, for example, an ability to easily form a coating film with film formability, oil resistance, solvent resistance, chemical resistance, and anticorrosion property in a good balance, it is more preferable to use the aliphatic polyamine in combination with at least one compound selected from MPCA, PACM, and Mannich modified products of MXDA.

The methylene-crosslinked poly(cyclohexyl-aromatic)amine (MPCA) is described, for example, in U.S. Patent No. 5,280,091. Specific examples thereof include a polyfunctional polyamine produced by hydrogenating an oligomer obtained by condensation of aniline and formaldehyde.

Specific examples of each Mannich-modified product of MXDA include a Mannich-modified amine obtained by Mannich condensation of one or two or more kinds of phenol compound, one or two or more kinds of aldehyde compound, and m-xylylenediamine.

The curing agent (B) may be obtained by a conventionally known procedure, or a commercially available product may be used. When a commercially available product is used, it is preferable to use a benzyl alcohol-free liquid amine curing agent.

As described above, from the viewpoint of, for example, an ability to easily form a coating film with excellent oil resistance, solvent resistance, chemical resistance, and anticorrosion property, it is preferable to use at least one compound selected from MPCA, PACM, and Mannich modified products of MXDA. However, as a result of examination by the present inventors, it has been found that when these commercially available products free of benzyl alcohol are used in a conventional composition, the film formability at a low temperature is poor. On the other hand, according to an embodiment of the present invention, even when these commercially available products free of benzyl alcohol are used, a composition with excellent film formability at a low temperature can be easily obtained.

Examples of a commercially available product of the benzyl alcohol-free liquid amine curing agent include "Ancamine 2738", "Ancamine 2264", "Ancamine 2167", "Ancamine 2422", "Ancamine 2089K" (the above compounds are manufactured by Air Products & Chemicals, Inc.), or "Ancamide 506" (manufactured by Evonik industries AG).

When the present composition is a two-component type composition containing a base component and a curing agent component, the curing agent (B) is included in the curing agent component. The viscosity of this curing agent component at 25°C as measured with an E-type viscometer is preferably 100,000 mPa·s or less and more preferably 10,000 mPa·s or less and more preferably 50 mPa·s or larger from the viewpoint of, for example, providing a composition with better handling and coating workability.

From the viewpoint of, for example, an ability to easily form a coating film with better anticorrosion property, the active hydrogen equivalent of the curing agent (B) is preferably 20 or higher and more preferably 40 or higher, and preferably 1000 or less and more preferably 500 or less.

From the viewpoint of, for example, an ability to easily form a coating film with excellent anticorrosion property, coating film strength, and drying property, it is desirable that the curing agent (B) is used in an amount such that the reaction rate calculated by the following formula (3) is preferably 0.3 or higher and more preferably 0.4 or higher, and preferably 1.0 or less and more preferably 0.8 or less. Reaction rate = {(Blending amount of curing agent (B)/Active hydrogen equivalent of curing agent (B)) + (Blending amount of component reactive to epoxy compound (A)/Functional group equivalent of component reactive to epoxy compound (A))}/{(Blending amount of epoxy compound (A)/Epoxy equivalent of epoxy compound (A)) + (Blending amount of component reactive to curing agent (B)/Functional group equivalent of component reactive to curing agent (B))}

Here, examples of the "component reactive to curing agent (B)" in the formula (3) include a component reactive to the curing agent (B) in the following other components. In addition, examples of the "component reactive to epoxy compound (A)" include a component reactive to the epoxy compound (A) in the following other components. The "functional group equivalent" of each component means a mass (g) per 1 mol functional group as obtained by dividing the mass of 1 mol of each component by the number of moles of functional group contained therein.

### <Dioxolane Derivative (C)>

The dioxolane derivative (C) is not particularly limited as long as the compound is represented by the following formula (1).

Note that the dioxolane derivative (C) is a naturally derived component, and is a compound having lower harmfulness than benzyl alcohol.

The dioxolane derivative (C) may be used together with the specific components (A) and (B) to form, at a low temperature, a coating film with excellent oil resistance, solvent resistance, chemical resistance, and anticorrosion property from a low-VOC coating composition substantially free of benzyl alcohol.

One kind of the dioxolane derivative (C) may be used, or two or more kinds thereof may be used.

The present composition may be a two-component type composition may consist of a base component containing the epoxy compound (A) and a curing agent component containing the curing agent (B). In this case, the dioxolane derivative (C) may be included only in the base component, may be included only in the curing agent component, or may be included in the base component and the curing agent component.

In consideration of, for example, handling of the base component, the dioxolane derivative (C) is preferably included at least in the base component.

Note that the dioxolane derivative (C) may be blended in the main component and the curing agent component, wherein the same compound may be blended in each component. Alternatively, the compound to be blended in the base component and the compound to be blended in the curing agent component may be different.

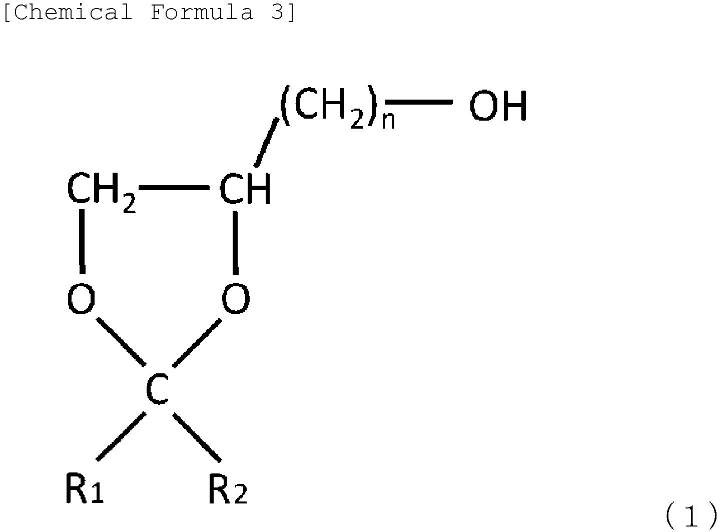

In formula (1), R₁ and R₂ are each independently a hydrogen atom, an alkyl group, an alkenyl group, or a phenyl group. From the viewpoint of, for example, an ability to reduce the volume of organic solvent for adjusting the viscosity to an appropriate coating viscosity and an ability to easily form a coating composition having a low VOC content and excellent coating workability, preferred is a hydrogen atom, an alkyl group, or an alkenyl group, and more preferred is a methyl group, an ethyl group, an n-propyl group, an isopropyl group, an n-butyl group, or an isobutyl group.

In formula (1), n is 1, 2, 3, 4 or 5. From the viewpoint of, for example, an ability to reduce the volume of organic solvent for adjusting the viscosity to an appropriate coating viscosity and an ability to easily form a coating composition having a low VOC content and excellent coating workability, preferred is 1, 2 or 3, and more preferred is 1 or 2.

Specific examples of the dioxolane derivative (C) include 2,2-dimethyl-1,3-dioxolane-4-methanol or 4-hydroxymethyl-2-isobutyl-2-methyl-1,3-dioxolane, and among these, 2,2-dimethyl-1,3-dioxolane-4-methanol is preferable.

From the viewpoint of, for example, providing, in a good balance, an ability to easily obtain a composition with excellent low-temperature film formability and an ability to easily form a coating film with, for instance, excellent oil resistance, solvent resistance, chemical resistance, and anticorrosion property, the content of the dioxolane derivative (C) in the present composition is preferably 1 mass% or larger, more preferably 3 mass% or larger, and particularly preferably 5 mass% or larger, and preferably 14 mass% or less, more preferably 12 mass% or less, and particularly preferably 11 mass% or less based on 100 mass% of the present composition.

From the viewpoint of, for example, providing, in a good balance, an ability to easily obtain a composition with excellent low-temperature film formability and an ability to easily form a coating film with, for instance, excellent oil resistance, solvent resistance, chemical resistance, and anticorrosion property, the content of the dioxolane derivative (C) is preferably 0.1 parts by mass or larger, more preferably 0.3 parts by mass or larger, and particularly preferably 0.5 parts by mass or larger, and is preferably 1.4 parts by mass or less, more preferably 1.2 parts by mass or less, and particularly preferably 1.0 part by mass or less based on 1 part by mass of the content of the curing agent (B).

### <Other Components>

In addition to the above (A) to (C), the present composition may include other conventionally known components used for coating compositions, such as a reactive diluent, a silane coupling agent, a pigment, an anti-sagging agent (anti-settling agent), a plasticizer, a dispersant, a leveling agent, a surface adjusting agent, an organic solvent, an epoxy compound other than the epoxy compound (A), and/or an amine curing agent other than the curing agent (B), as long as the effects of the present invention are not impaired.

These other components may be used singly, or two or more thereof may be used, or may be added to the base component or added to the curing agent component.

### [Reactive Diluent]

The present composition may contain a reactive diluent, and preferably contains a reactive diluent. The reactive diluent is preferably an epoxy group-containing reactive diluent.

One kind of the reactive diluent may be used, or two or more kinds thereof may be used.

The epoxy group-containing reactive diluent is not particularly limited as long as the epoxy compound has a viscosity of 500 mPa·s or less at 25°C as measured with an E-type viscometer (FMD type; manufactured by TOKIMEC INC.), and may be a monofunctional type or a polyfunctional type.

Examples of the monofunctional epoxy group-containing reactive diluent include alkyl glycidyl ether (with a C₁₋₁₃ alkyl group), phenyl glycidyl ether, o-cresyl glycidyl ether, alkyl phenyl glycidyl ether (with a C₁₋₂₀, preferably C₁₋₅ alkyl group; e.g., methyl phenyl glycidyl ether, ethyl phenyl glycidyl ether, propyl phenyl glycidyl ether, or p-tert-butyl phenyl glycidyl ether), phenol glycidyl ether, alkylphenol glycidyl ether, or phenol (EO)ₙglycidyl ether (the number of repetitions: n = 3 to 20; EO: -C₂H₄O-).

Examples of the polyfunctional epoxy group-containing reactive diluent include 1,4-butanediol diglycidyl ether, 1,6-hexanediol diglycidyl ether, neopentyl glycol diglycidyl ether, cyclohexane dimethanol diglycidyl ether, resorcinol diglycidyl ether, mono- or poly-alkylene glycol diglycidyl ether (with a C₁₋₅ alkylene group; e.g., ethylene glycol diglycidyl ether, dipropylene glycol diglycidyl ether, polypropylene glycol diglycidyl ether), or trimethylolpropane triglycidyl ether.

The present composition may contain a reactive diluent. In this case, from the viewpoint of, for example, an ability to easily form a coating film with, for instance, excellent oil resistance, solvent resistance, chemical resistance, and anticorrosion property, the content of the reactive diluent is preferably 10 mass% or less, more preferably 8 mass% or less, and particularly preferably 6 mass% or less, and preferably 0.1 mass% or larger and more preferably 0.5 mass% or larger based on 100 mass% of the nonvolatile content in the present composition.

### [Silane Coupling Agent]

The present composition may contain a silane coupling agent, and preferably contains a silane coupling agent.

The silane coupling agent is not particularly limited, and each conventionally known compound may be used. A compound having at least two functional groups in the same molecule and being able to contribute to, for example, improvement in adhesion to a substrate and a decrease in the viscosity of the present composition is preferable. For example, the silane coupling agent is preferably a compound represented by the formula: "X-SiMeₙY₃₋ₙ " [n is 0 or 1; X is a reactive group capable of reacting with an organic substance (e.g., an amino group, a vinyl group, an epoxy group, a mercapto group, a halogen group, a group in which part of a hydrocarbon group is substituted with these groups, or a group where part of a group, in which part of a hydrocarbon group is substituted with, for instance, an ether bond, is substituted with these groups); Me is a methyl group; and Y is a hydrolyzable group (e.g., an alkoxy group such as methoxy group or an ethoxy group)].

One kind of the silane coupling agent may be used, or two or more kinds thereof may be used.

From the viewpoint of, for example, an ability to easily form a coating film with, for instance, excellent adhesion to a substrate, and excellent oil resistance, solvent resistance, chemical resistance, and anticorrosion property, the silane coupling agent is preferably a compound having an epoxy group and an alkoxy group. An alkoxy group-containing silane coupling agent having one epoxy group in one molecule is more preferable.

The silane coupling agent used may be a commercially available product. Specific examples of the commercially available product include: (3,4-epoxycyclohexyl)ethyltrimethoxysilane (e.g., "KBM 303", manufactured by Shin-Etsu Chemical Co., Ltd.); γ-glycidoxypropyltrimethoxysilane (e.g., "KBM 403", manufactured by Shin-Etsu Chemical Co., Ltd.); γ-glycidoxypropylmethyldimethoxysilane (e.g., "AY43-026", manufactured by Dow Corning Toray Co., Ltd.); or γ-glycidoxypropylmethyldiethoxysilane (e.g., "KBE 402", manufactured by Shin-Etsu Chemical Co., Ltd.).

The present composition may contain a silane coupling agent. In this case, from the viewpoint of, for example, an ability to easily produce a coating film with better adhesion to a substrate and better solvent resistance, chemical resistance, and anticorrosion property, the content of the silane coupling agent is preferably 1 mass% or larger and more preferably 3 mass% or larger, and preferably 25 mass% or less and more preferably 15 mass% or less based on 100 mass% of the nonvolatile content in the present composition.

### [Pigment]

The present composition may contain a pigment, and preferably contains a pigment.

Examples of the pigment include an extender pigment, a coloring pigment, or an anti-rust pigment, and the pigment may be organic or inorganic.

One kind of the pigment may be used, or two or more kinds thereof may be used.

Examples of the extender pigment include talc, mica, (precipitating) barium sulfate, (potash) feldspar, kaolin, alumina white, bentonite, wollastonite, clay, glass flakes, aluminum flakes, scaly iron oxide, magnesium carbonate, barium carbonate, calcium carbonate, dolomite, or silica. In particular, talc, mica, silica, (precipitating) barium sulfate, or (potash) feldspar is preferable.

Among them, mica is preferably used from the viewpoint of, for example, relaxing the internal stress of a cured coating film and improving adhesion to a substrate.

The present composition may contain an extender pigment. In this case, the content of the extender pigment is preferably 10 mass% or larger and more preferably 20 mass% or larger, and preferably 70 mass% or less and more preferably 60 mass% or less based on 100 mass% of the nonvolatile content in the present composition.

Examples of the coloring pigment include an inorganic pigment (e.g., carbon black, titanium dioxide (titanium white), iron oxide (red iron oxide), yellow iron oxide, ultramarine blue), or an organic pigment (e.g., cyanine blue, cyanine green). In particular, titanium white, carbon black, or red iron oxide is preferable.

The present composition may contain a coloring pigment. In this case, the content of the coloring pigment is preferably from 1 to 30 mass% and more preferably from 1 to 10 mass% based on 100 mass% of the nonvolatile content in the present composition.

Examples of the anti-rust pigment include zinc powder, zinc alloy powder, a zinc phosphate compound, a calcium phosphate compound, an aluminum phosphate compound, a magnesium phosphate compound, a zinc phosphite compound, a calcium phosphite compound, an aluminum phosphite compound, a strontium phosphite compound, an aluminum tripolyphosphate compound, a molybdate compound, a zinc cyanamide compound, a borate compound, a nitro compound, or a complex oxide.

The present composition may contain a pigment. In this case, from the viewpoint of, for example, an ability to easily obtain a composition with excellent coating workability and an ability to easily produce a coating film with excellent water resistance and excellent adhesion to a substrate due to stress relaxation, the pigment volume concentration (PVC) in the present composition is preferably from 10 to 70% and more preferably from 10 to 50%.

The PVC refers to the total volume concentration of the pigment based on the volume of the nonvolatile content in the present composition. Specifically, the PVC can be calculated from the following formula: PVC [%] = Total volume of all pigments in the present composition × 100/Volume of nonvolatile content in the present composition.

The nonvolatile content in the present composition is substantially the same value as the mass NV (mass%).

The volume of the nonvolatile content in the present composition can be calculated from the mass and true density of the nonvolatile content in the present composition. The mass and true density of the nonvolatile content may be measured values or values calculated from raw materials used.

The volume of the pigment can be calculated from the mass and true density of the pigment used. The mass and true density of the pigment may be measured values or values calculated from raw materials used. For example, they can be calculated by separating the pigment and other components from the nonvolatile content in the present composition and measuring the mass and true density of the pigment separated.

### [Anti-Sagging Agent (Anti-Settling Agent)]

It is possible to use, as the anti-sagging agent (anti-settling agent), each conventionally known agent (e.g., an organoclay wax such as a stearate salt, a lecithin salt, or an alkyl sulfonate of Al, Ca, or Zn, polyethylene wax, amide wax, hydrogenated castor oil wax, a mixture of hydrogenated castor oil wax and amide wax, synthetic fine powder silica, or polyethylene oxide wax). Among them, amide wax, synthetic fine powder silica, polyethylene oxide wax, or organoclay wax is preferable.

One kind of the anti-sagging agent (anti-settling agent) may be used, or two or more kinds thereof may be used.

Examples of such an anti-sagging agent (anti-settling agent) include each commercially available product (e.g., "Disparlon 305", "Disparlon 4200-20", "Disparlon 6650", manufactured by Kusumoto Chemicals, Ltd.; "A-S-A T-250F", manufactured by ITOH OIL CHEMICALS CO., LTD.; "Flownon RCM-300", manufactured by KYOEISHA CHEMICAL Co., LTD.; or "BENTONE SD-2", manufactured by Elementis Specialties, Inc.)

The present composition may contain an anti-sagging agent (anti-settling agent). In this case, the content of the anti-sagging agent (anti-settling agent) is preferably from 0.5 to 4 mass% based on 100 mass% of the nonvolatile content in the present composition.

### [Plasticizer]

Examples of the plasticizer include a petroleum resin, a xylene resin, a terpene phenol resin, or an acrylic resin. Inclusion of the plasticizer in the present composition can enhance, for example, the anticorrosion property, flexibility, and coating film compatibility with a top coating application (e.g., excellent adhesion to a top coating film that may be formed on a coating film formed from the present composition) of a coating film to be obtained.

One kind of the plasticizer may be used, or two or more kinds thereof may be used.

The petroleum resin is a hydroxyl group-containing polymer using, as a main raw material, a fraction by-produced in petroleum refining. Preferably, a hydroxyl group-containing petroleum resin has a softening point of 150°C or lower and preferably 100°C or lower. When the softening point of the petroleum resin is higher than 150°C, the viscosity of the composition to be obtained may be increased, so that the workability may be deteriorated or the physical properties of the resulting coating film may be deteriorated.

Specific examples of such a petroleum resin include "Necires EPX-L" (indene-styrene-type, manufactured by Nevcin Polymers Co.) or "HILENOL PL-1000S" (C9 fraction petroleum resin, manufactured by Kolon Industries, Inc.).

The xylene resin is preferably a resin synthesized by a known method using m-xylene and formaldehyde. In addition, the xylene resin used may be a xylene resin modified with a phenol compound (e.g., phenol or bifunctional phenol (e.g., para-t-butylphenol)).

Specific examples of such a xylene resin include "NIKANOL Y-51" or "NIKANOL Y-100" (each is a xylene formaldehyde resin, manufactured by Fudow Co., Ltd.).

The present composition may contain a plasticizer. In this case, the content of the plasticizer is preferably from 0.5 to 5 mass% based on 100 mass% of the nonvolatile content in the present composition.

### <Method for Producing Present Composition>

The present composition is preferably produced by mixing, at the time of use, a base component and a curing agent component, which are each individually prepared in advance.

The base component may be prepared by blending, stirring, and mixing the respective components constituting the base component. At this time, it is preferable to use, for example, an SG mill or a high-speed disperser to disperse the blended components as uniformly as possible while maintaining the temperature of the mill base at 55 to 60°C for about 30 minutes.

On the other hand, depending on the components to be blended, each component constituting the curing agent component may be uniformly mixed with, for example, a stirrer.

### <Use of Present Composition>

The present composition can be used to form a coating film (layer) with various performances such as oil resistance, solvent resistance, chemical resistance, and anticorrosion property. Examples of the corrosion to be prevented also include crevice corrosion, galvanic corrosion, and/or stress corrosion.

The present composition can be used to form a coating film having these excellent performances. Thus, the present composition is preferably used for an inner surface of a cargo tank (e.g., a product carrier or a chemical tanker) for transporting each chemical substance by, for example, land transportation or sea transportation, or a land tank for likewise storing each chemical product. The present composition is also preferably used for an inner surface of a tank such as a Water Ballast Tank (WBT), a Crude Oil Tank (COT), a Fresh Water Tank (FWT), or a Drinking Water Tank (DWT), or an inner and outer surface of, for example, a ship. In addition to these applications, the present composition is suitable for, for example, use in places where maintenance of, for example, a seawater desalination apparatus or an offshore structure, is difficult, for around gates of dams and/or water gates, for pipes, water tanks or water storage tanks of, for example, plants using seawater, river water, and/or industrial water as cooling water, or for used nuclear fuel storage pools.

In particular, the present composition is preferably used as a universal primer for tanks (e.g., a product carrier, a chemical tanker), inner surfaces of pipelines, or ships used for transporting or storing, for example, each chemical substance.

In addition, the present composition may also be used for repair-coating application of a surface of a substrate with an anticorrosive coating film in which corrosion has occurred. That is, the present composition may be applied to a welded portion of a substrate such as stainless steel or a place with a gap to prevent local corrosion of the substrate. Also, the present composition should further act as an adhesive for adhering a stainless steel plate to a surface of the coating film. Accordingly, local corrosion can be stably suppressed for a long period of time.

As described above, when the substrate is repaired, for example, the present composition may be applied to a surface of the substrate having a welded portion (welding line) or a gap, and another substrate may be adhered to an uncured coating film surface. Further, the present composition may be applied onto the other substrate.

### <<Coating Film, Substrate with Coating Film, Method for Producing Substrate with Coating Film>>

The present composition may be used to form a coating film (hereinafter, referred to as the "present coating film") according to an embodiment of the present invention. Specifically, the coating film may be formed by drying (curing) the present composition, and is usually formed on a substrate. A preferred example of the present coating film is an anticorrosive coating film.

The substrate with a coating film according to an embodiment of the present composition is a laminate including the present coating film and a substrate (object to be applied).

The material for the substrate is not particularly limited, and examples thereof include iron and steel (e.g., iron, steel, alloy iron, carbon steel, mild steel, alloy steel), non-iron metal (e.g., zinc, aluminum), or stainless steel. The surface of the substrate may be applied with, for example, a shop primer.

In addition, for example, mild steel (e.g., SS 400) may be used as the substrate. In this case, if necessary, it is desirable to adjust the substrate adjustment (e.g., adjust the arithmetic mean roughness (Ra) to about 30 to 75 µm) by, for example, polishing the surface by, for instance, grit blasting.

The dry film thickness of the present coating film is not particularly limited, but is usually 50 µm or more and preferably 200 µm or more, and usually 500 µm or less and preferably 400 µm or less from the viewpoint of, for example, obtaining a coating film having, for instance, sufficient anticorrosion property.

A method of forming the present coating film may include forming a desired film thickness by one coating application (one coating), or a coating film having a desired film thickness by two or more coating applications (two or more coatings). From the viewpoint of film thickness management and in consideration of the residual organic solvent in the coating film, it is preferable to form a coating film so as to have a desired dry film thickness by two or more coating applications.

The method for producing a substrate with a coating film according to an embodiment of the present invention (hereinafter, referred to as the "present method") includes the following steps [1] and [2]:
the step [1]: a step of applying the present composition to a substrate; and
the step [2]: a step of drying the applied coating composition to form a coating film.

### <Step [1]>

The coating application process in the step [1] is not particularly limited. For example, the composition may be applied to a surface of the substrate by a conventional process such as airless spray coating application, air spray coating application, brush coating application, or roller coating application. Meanwhile, the composition may be applied to a large structure such as a tank. In this case, spray coating application is preferable, for example, from the viewpoint that a substrate with a large area can be easily applied.

Note that in the coating application, the present composition may be diluted, if appropriate, with, for example, a thinner (organic solvent) and then used. However, even when diluted in this way, the VOC content in the present composition is preferably 200 g/L or less.

The conditions of the spray coating application may be adjusted, if appropriate, according to a dry film thickness to be formed. However, for example, in the case of airless spray, the primary (air) pressure is preferably from about 0.4 to 0.8 MPa, the secondary (coating material) pressure is preferably from about 15 to 36 MPa, and the gun moving speed is preferably from about 50 to 120 cm/second.

Further, coating application may be performed so that the dry film thickness of the resulting coating film falls within the above-mentioned range.

The viscosity of the present composition suitable for spray coating application is preferably from 1,500 to 7,000 mPa·s and more preferably from 1,500 to 4,000 mPa·s under measurement conditions at 23°C while using an E-type viscometer (FMD type; manufactured by TOKIMEC INC.).

### <Step [2]>

The drying condition in the step [2] is not particularly limited, and may be set, if appropriate, according to, for example, the coating film formation method, the type of substrate, the usage, or the coating application environment. For example, conditions at 0 to 35°C for 12 to 250 hours can be exemplified. Meanwhile, the resin composition may be forced dried and cured by heating or air blowing as desired, but is usually dried and cured under natural conditions.

The present composition excels in film formability at a low temperature, and thus can be dried at a temperature of 10°C or lower, and further at 5°C or lower. It is preferable to dry the present composition at these temperatures, for example, from the viewpoint that the present invention exerts a more significant effect than conventional compositions.

The present composition can also be dried at such a temperature. Thus, the present composition is suitably used for applying a substrate that cannot be heated or is not easily heated. Even when such a substrate is applied at a low temperature such as in winter, a desired coating film can be formed.

Note that when a coating film is formed by the two or more coating applications, in particular, two coating applications, the steps [1] and [2] are performed, and then a series of the steps [1] and [2] is repeated on the resulting coating film to form a coating film. When a coating film is formed by three coating applications, the coating film is formed by further repeating a series of the steps [1] and [2] on the coating film obtained by two coating applications.

### Examples

Hereinafter, preferred embodiments of the present invention will be described more specifically with reference to Examples. However, the present invention is not limited to these Examples.

### [Examples 1 to 30, Reference Example 1, and Comparative Examples 1 to 3]

To a container was added each material, described in each row of base component in Tables 1 to 4, at the numerical value (parts by mass) designated in the row. The mixture was stirred at room temperature (23°C) by using a high-speed disperser until it became uniform, and then dispersed at 56 to 60°C for about 30 minutes. Thereafter, the mixture was cooled to 30°C or lower to prepare a base component of the coating composition.

In addition, to a container was added each material, described in each row of curing agent component in Tables 1 to 4, at the numerical value (parts by mass) designated in the row. A high-speed disperser was used to mix these components at room temperature under normal pressure. The curing agent component was thus prepared.

The base component and the curing agent component were mixed before coating application to prepare a coating composition.

Note that Table 5 shows the description of each component described in Tables 1 to 4.

### [Production of Test Plate]

An SS400 sandblasted steel plate (arithmetic mean roughness (Ra): 30 to 75 µm) with a size of 150 mm × 70 mm × 2.3 mm (thickness) was provided. Each coating composition prepared as described above was applied onto a surface of the steel plate by using an airless spray, so that the dry film thickness was 300 µm. Thereafter, the material was dried at 23°C for 10 days to produce a steel plate with coating film (test plate). Each of the produced test plates was subjected to each test described later. The results are shown in Tables 1 to 4.

### <Low-Temperature Film Formability>

Each coating composition was applied in substantially the same manner as in the production of the test plate. Then, the state of the coating film after drying at 5°C or 10°C for 1 day was evaluated according to the following criteria.

### (Evaluation Criteria)

A: No cracks are detected at all in the coating film.
B: Slight cracks are detected only at the edges of the coating film.
C: Cracks are detected over the entire coating film.

### <Anticorrosion Property>

The anticorrosion property of each obtained coating film was tested in accordance with JIS K 5600-6-1 (test protocol for liquid resistance).

A notch 2 reaching the steel plate from the coating film side was made at the position of each test plate as shown in Fig. 1. The test plate 1 with the notch 2 was immersed in 3% salt water at 40°C for 90 days with the notch 2 side facing down (in the direction shown in Fig. 1). After immersion, eleven cuts 3 were made upward, in sequence, from the left end of the notch 2 so as to divide the notch 2 equally at 5 mm intervals. The peeling length (length from the notch 2) between the steel plate and the coating film was measured at 10 measurement sites 4 between the respective cuts 3. The measured peeling lengths at the 10 points were averaged and then evaluated according to the following criteria.

### (Evaluation Criteria)

4: Peeling length is less than 5 mm
3: Peeling length is 5 mm or more and less than 10 mm
2: Peeling length is 10 mm or more and less than 15 mm
1: Peeling length is 15 mm or more

### <Oil Resistance>

The oil resistance of each obtained coating film was tested in accordance with JIS K 5600-6-1 (test protocol for liquid resistance).

Each of the produced test plates was immersed in naphtha at room temperature for 180 days. The test plates after immersion were evaluated according to the following criteria.

Note that the pencil hardness was measured according to JIS K 5600-5-4.

### (Evaluation Criteria)

5: No rust was generated on the steel plate, no blistering was generated on the coating film, and the pencil hardness of the coating film was HB or more.
4: No rust was generated on the steel plate, no blistering was generated on the coating film, and the pencil hardness of the coating film was from B to 4B.
3: No rust was generated on the steel plate, no blistering was generated on the coating film, and the pencil hardness of the coating film was 5B or less.
2: Slight rust was generated on the steel plate, and blistering occurred on the coating film.
1: Rust was generated on the steel plate, and blistering occurred on the coating film.

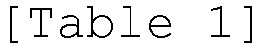

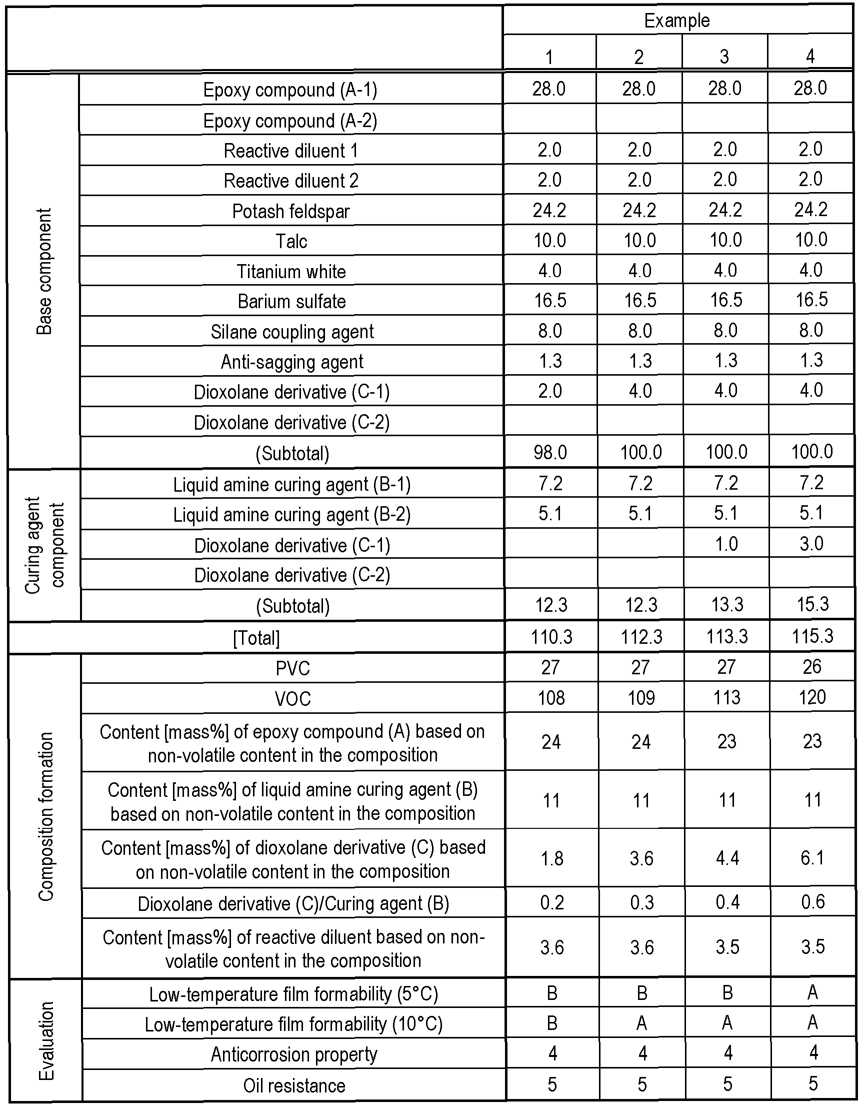

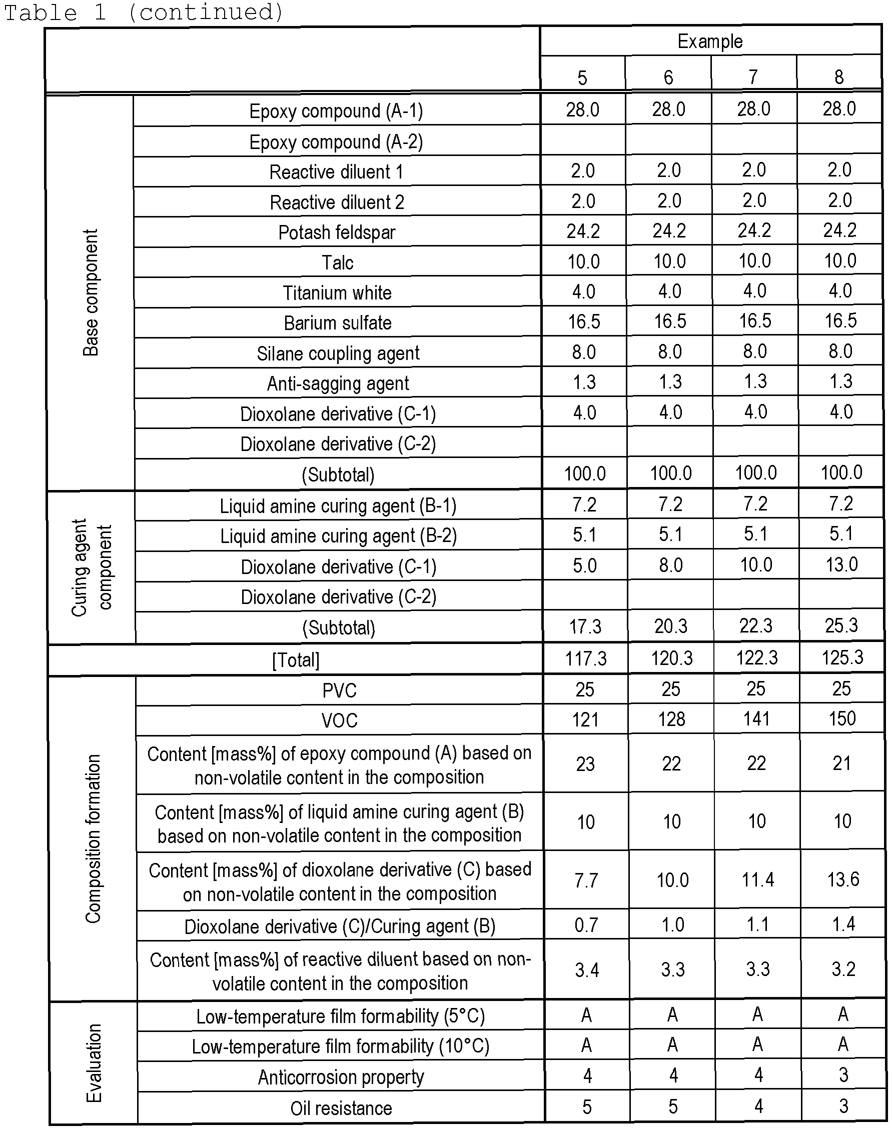

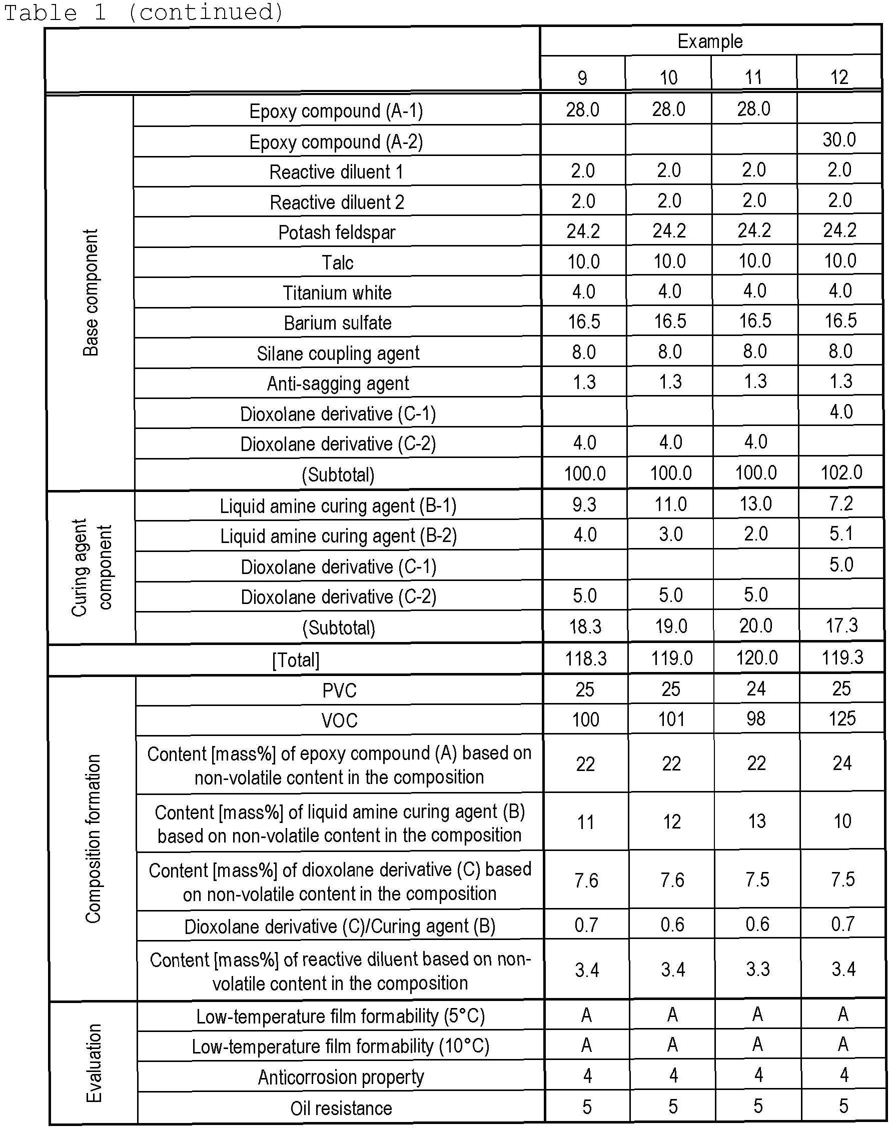

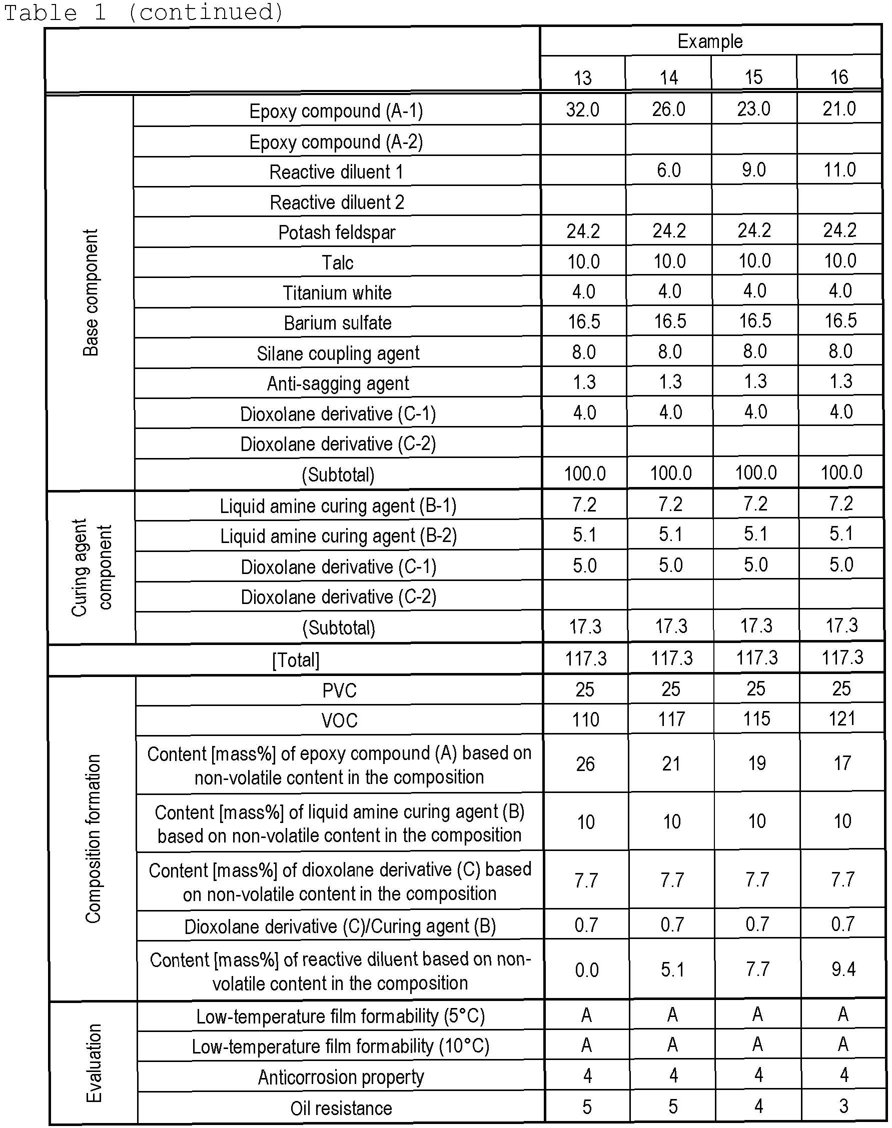

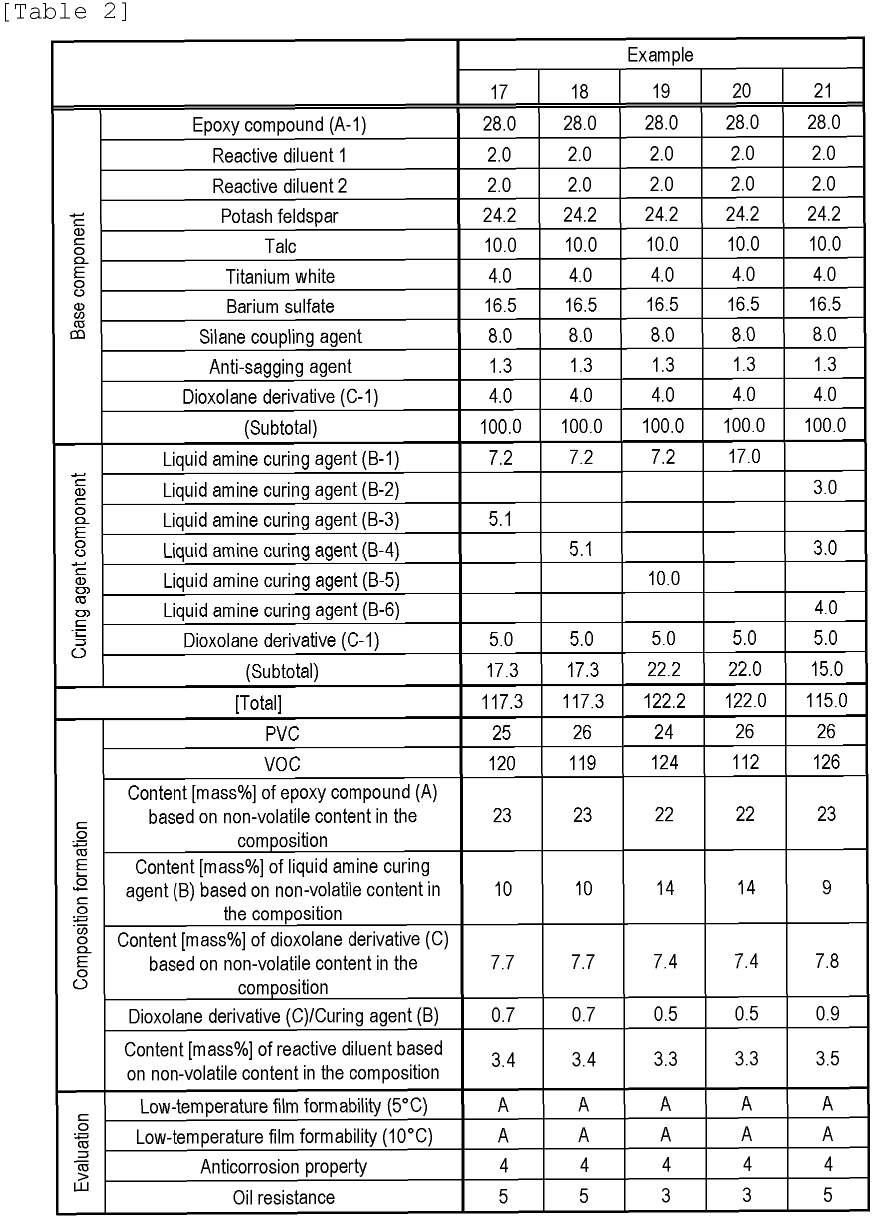

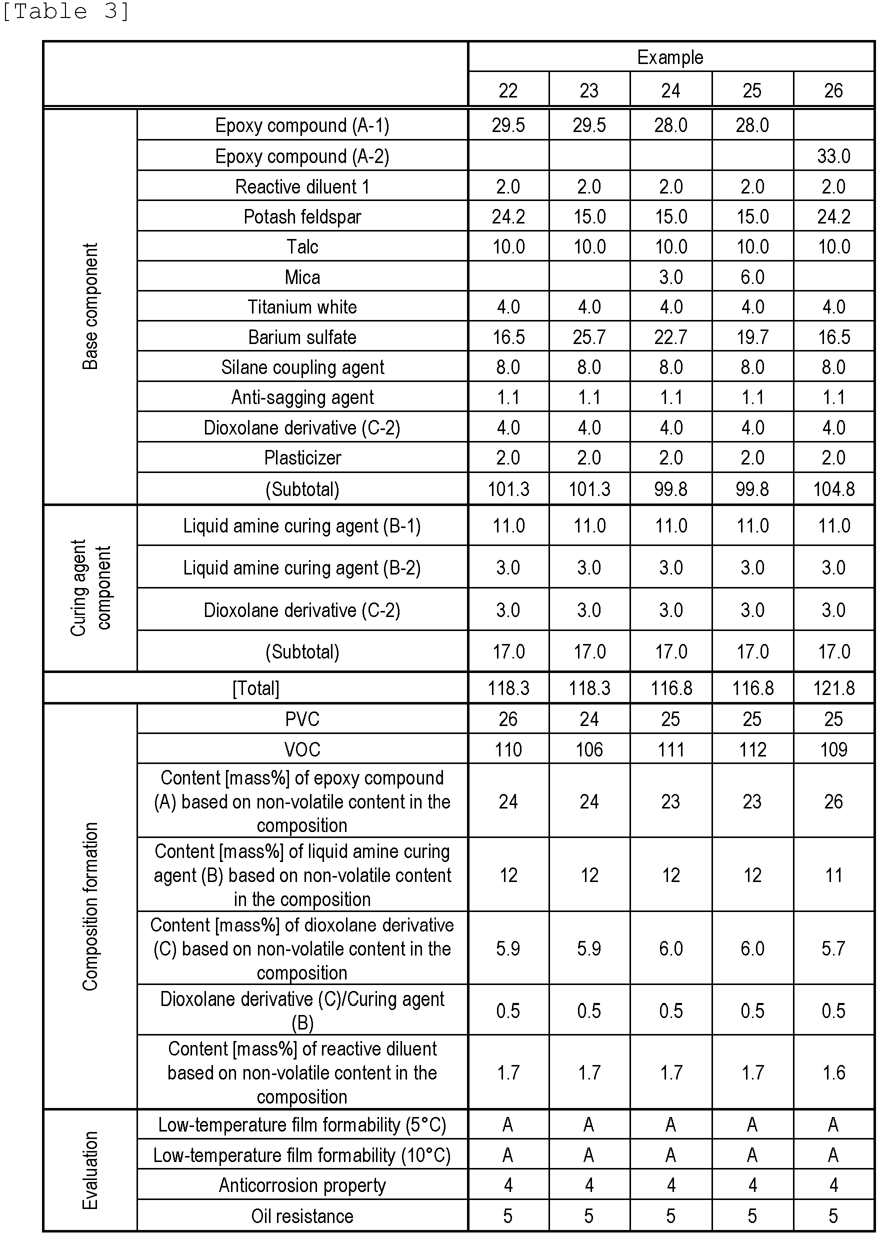

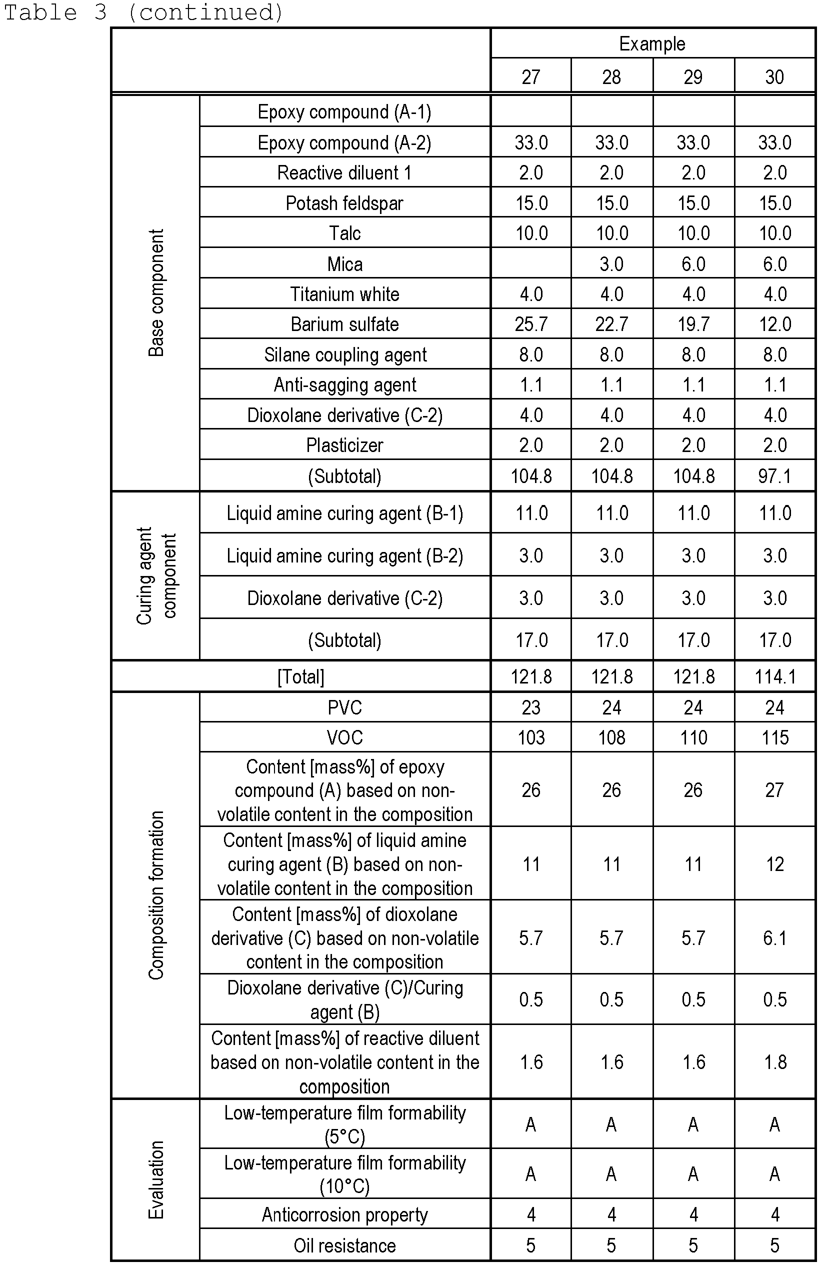

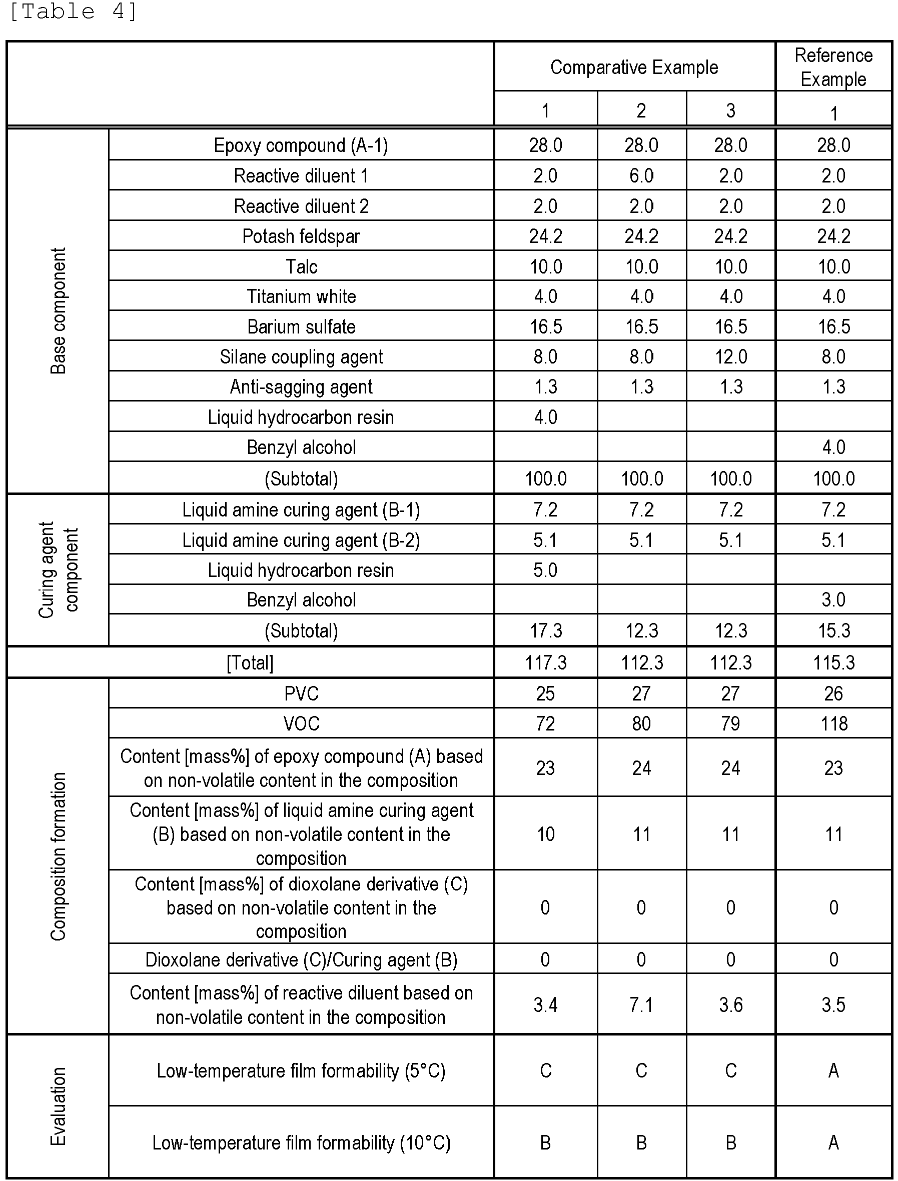

**[Table 5]**

| | |
|---|---|
| Epoxy compound (A-1) | Bisphenol F-type epoxy resin with an epoxy equivalent of 160 to 175 and a viscosity of 3000 to 4500 mPa·s; jER 807 (Mitsubishi Chemical Corporation) |
| Epoxy compound (A-2) | Bisphenol A type epoxy resin with an epoxy equivalent of 180 to 190 and a viscosity of 11,000 to 16,000 mPa·s; E-028 (OHTAKE-MEISHIN CHEMICAL, CO., LTD.) |
| Reactive diluent 1 | Reactive diluent 1 with an epoxy equivalent of 131 and a viscosity of 10 to 18 mPa·s; ERISYS GE-20 (CVC Thermoset Specialties Inc.) |
| Reactive diluent 2 | Reactive diluent 2 with an epoxy equivalent of 182 and a viscosity of 5 to 10 mPa·s; ERISYS GE-10 (CVC Thermoset Specialties Inc.) |
| Potash feldspar | Potash feldspar; Unispar PG-K10 (Sibelco Malaysia Sdn Bhd Inc.) |
| Talc | Talc; FC-1 (Fukuoka Talc Co., LTD.) |
| Mica | Mica powder 100-mesh (Fukuoka Talc Co., LTD.) |
| Titanium white | Titanium white; R-5N (SAKAI CHEMICAL INDUSTRY CO., LTD.) |
| Barium sulfate | Barium sulfate; Barico 300W (HAKUSUI TECH) |
| Silane coupling agent | Silane coupling agent; KBM 403 (Shin-Etsu Chemical Co., Ltd.) |
| Anti-sagging agent | Amido wax; Disparlon 6650 (Kusumoto Chemicals, Ltd.) |
| Dioxolane derivative (C-1) | 2,2-Dimethyl-1,3-dioxolane-4-methanol |
| Dioxolane derivative (C-2) | 4-Hydroxymethyl-2-isobutyl-2-methyl-1,3-dioxolane |
| Liquid hydrocarbon resin | Cardanol derivative; NX-2026 (Cardolite Inc.) |
| Plasticizer | Petroleum resin; Hirenol PL-1000S (Kolon Industries, Inc.) |
| Liquid amine curing agent (B-1) | Benzyl alcohol-free aliphatic polyamine with an active hydrogen equivalent of 95 and a viscosity of 100 to 200 mPa·s; Ancamine 2738 (Air Products & Chemicals, Inc.) |
| Liquid amine curing agent (B-2) | Benzyl alcohol-free alicyclic amine (MPCA) with an active hydrogen equivalent of 54 and a viscosity of 2600 mPa·s; Ancamine 2264 (Air Products & Chemicals, Inc.) |
| Liquid amine curing agent (B-3) | Benzyl alcohol-free alicyclic amine (PACM) with an active hydrogen equivalent of 53 and a viscosity of 210 mPa·s; Ancamine 2167 (Air Products & Chemicals, Inc.) |
| Liquid amine curing agent (B-4) | Benzyl alcohol-free Mannich modified product of MXDA with an active hydrogen equivalent of 49 and a viscosity of 2000 mPa·s; Ancamine 2422 (Air Products & Chemicals, Inc.) |
| Liquid amine curing agent (B-5) | Benzyl alcohol-free aliphatic polyamido amine with an active hydrogen equivalent of 105 and a viscosity of 200 mPa s; Ancamide 506 (Evonik Industries AG) |
| Liquid amine curing agent (B-6) | Benzyl alcohol-free aliphatic polyamine with an active hydrogen equivalent of 75 and a viscosity of 170 mPa·s; Ancamine 2089K (Air Products & Chemicals, Inc.) |

Each composition of the above Examples is a low-VOC coating composition, excels in film formability at a low temperature, and has excellent oil resistance and anticorrosion property. In addition, each composition of the above Examples is also considered to excel in solvent resistance and chemical resistance.

### Reference Signs List

- 1: Test plate
- 2: Notch
- 3: Cut
- 4: Measurement site

## Claims

1. A low-VOC (volatile organic compound) coating composition substantially free of benzyl alcohol, comprising:
a bisphenol epoxy compound (A) having an epoxy equivalent of 200 or less;
a liquid amine curing agent (B) wherein "liquid" means that the viscosity measured with an E-type viscometer at 25°C is 1,000 Pa.s or less ; and
a dioxolane derivative (C) represented by the following formula (1): 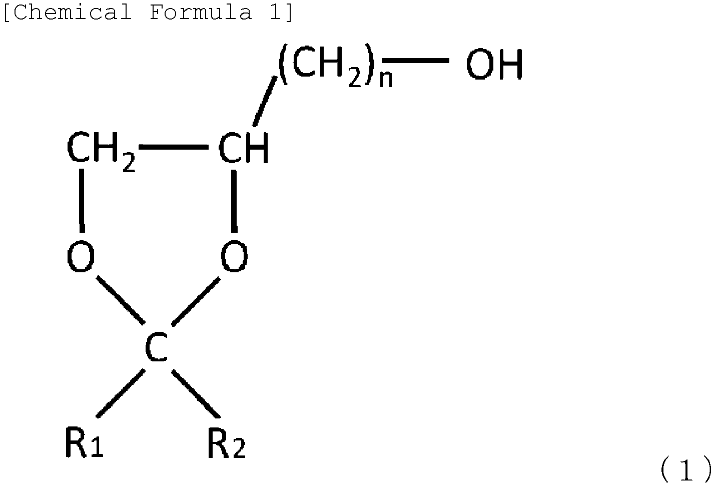
wherein R₁ and R₂ are each independently a hydrogen atom, an alkyl group, an alkenyl group, or a phenyl group, and n is 1, 2, 3, 4, or 5.

2. The coating composition according to claim 1, wherein the liquid amine curing agent (B) includes at least one compound selected from methylene-crosslinked poly(cyclohexylaromatic)amine, 4,4'-methylenebis(cyclohexylamine), and Mannich modified products of m-xylylenediamine.

3. The coating composition according to claim 1 or 2, wherein content of the dioxolane derivative (C) is from 1 to 14 mass% based on 100 mass% of nonvolatile content in the coating composition.

4. The coating composition according to any one of claims 1 to 3, wherein content of the dioxolane derivative (C) is from 0.1 to 1.4 parts by mass based on 1 part by mass of content of the liquid amine curing agent (B).

5. The coating composition according to any one of claims 1 to 4, wherein the VOC content is 200 g/L or less, determined as indicated in the specification.

6. The coating composition according to any one of claims 1 to 5, further comprising a reactive diluent other than the epoxy compound (A).

7. A coating film formed from the coating composition according to any one of claims 1 to 6.

8. A method for producing a coating film, comprising a step of drying the coating composition according to any one of claims 1 to 6 at a temperature of 10°C or lower to form a coating film.

9. A substrate with a coating film comprising the coating film according to claim 7 and a substrate.

10. A method for producing a substrate with a coating film, comprising the following steps [1] and [2]:
the step [1] of applying the coating composition according to any one of claims 1 to 6 to a substrate; and
the step [2] of drying the applied coating composition to form a coating film.

11. The substrate with a coating film production method according to claim 10, wherein the step [2] is a step of drying the applied coating composition at a temperature of 10°C or lower to form a coating film.

## Patentansprüche

1. Beschichtungszusammensetzung mit niedrigem VOC (flüchtige organische Verbindungen)-Gehalt, die im Wesentlichen frei von Benzylalkohol ist, umfassend:
eine Bisphenolepoxidverbindung (A) mit einem Epoxidäquivalent von 200 oder weniger,
ein flüssiges Amin-Härtungsmittel (B), wobei "flüssig" bedeutet, dass die Viskosität, gemessen mit einem Viskosimeter vom Typ E bei 25°C, 1.000 Pa·s oder weniger beträgt, und
ein durch die folgende Formel (1) dargestelltes Dioxolanderivat (C): 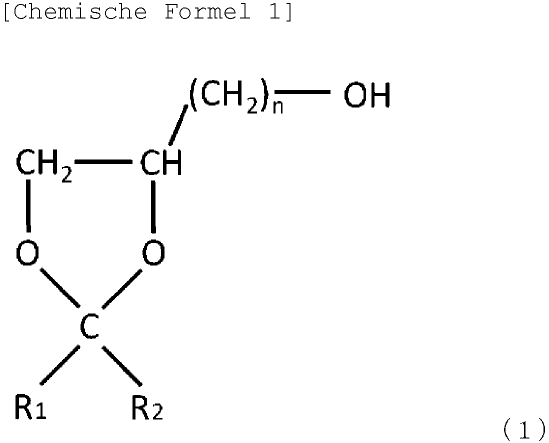
worin R₁ und R₂ jeweils unabhängig ein Wasserstoffatom, eine Alkylgruppe, eine Alkenylgruppe oder eine Phenylgruppe sind und n 1, 2, 3, 4 oder 5 ist.

2. Beschichtungszusammensetzung gemäß Anspruch 1, wobei das flüssige Amin-Härtungsmittel (B) mindestens eine Verbindung, ausgewählt aus methylenvernetztem Poly(cyclohexyl-aromatischen)amin, 4,4'-Methylenbis(cyclohexylamin) und Mannich-modifizierten Produkten von m-Xylylendiamin, einschließt.

3. Beschichtungszusammensetzung gemäß Anspruch 1 oder 2, wobei ein Gehalt des Dioxolanderivats (C) 1 bis 14 Masse-% bezogen auf 100 Masse-% des nichtflüchtigen Gehalts in der Beschichtungszusammensetzung beträgt.

4. Beschichtungszusammensetzung gemäß einem der Ansprüche 1 bis 3, wobei ein Gehalt des Dioxolanderivats (C) 0,1 bis 1,4 Masseteile bezogen auf 1 Masseteil des Gehalts des flüssigen Amin-Härtungsmittels (B) beträgt.

5. Beschichtungszusammensetzung gemäß einem der Ansprüche 1 bis 4, wobei der VOC-Gehalt 200 g/L oder weniger, bestimmt wie in der Beschreibung angegeben, beträgt.

6. Beschichtungszusammensetzung gemäß einem der Ansprüche 1 bis 5, ferner umfassend ein anderes reaktives Verdünnungsmittel als die Epoxidverbindung (A).

7. Beschichtungsfilm, der aus der Beschichtungszusammensetzung gemäß einem der Ansprüche 1 bis 6 gebildet ist.

8. Verfahren zur Herstellung eines Beschichtungsfilms, umfassend einen Schritt zum Trocknen der Beschichtungszusammensetzung gemäß einem der Ansprüche 1 bis 6 bei einer Temperatur von 10°C oder niedriger, um einen Beschichtungsfilm zu bilden.

9. Substrat mit einem Beschichtungsfilm, umfassend den Beschichtungsfilm gemäß Anspruch 7 und ein Substrat.

10. Verfahren zur Herstellung eines Substrats mit einem Beschichtungsfilm, umfassend die folgenden Schritte [1] und [2]:
den Schritt [1] zum Auftragen der Beschichtungszusammensetzung gemäß einem der Ansprüche 1 bis 6 auf ein Substrat und
den Schritt [2] zum Trocknen der aufgetragenen Beschichtungszusammensetzung, um einen Beschichtungsfilm zu bilden.

11. Herstellungsverfahren für ein Substrat mit einem Beschichtungsfilm gemäß Anspruch 10, wobei der Schritt [2] ein Schritt zum Trocknen der aufgetragenen Beschichtungszusammensetzung bei einer Temperatur von 10°C oder niedriger zur Bildung eines Beschichtungsfilms ist.

## Revendications

1. Composition de revêtement à faible teneur en COV (composés organiques volatils) sensiblement exempte d'alcool benzylique, comprenant :
un composé (A) époxy de type bisphénol ayant un équivalent époxy de 200 ou moins ;
un agent (B) de durcissement à base d'amine liquide dans laquelle « liquide » signifie que la viscosité mesurée avec un viscosimètre de type E à 25 °C est de 1000 Pa.s ou moins ; et
un dérivé (C) de dioxolane représenté par la formule (1) suivante : 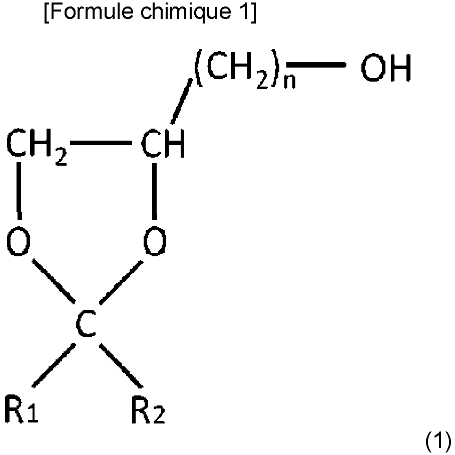
dans laquelle R₁ et R₂ sont chacun indépendamment un atome d'hydrogène, un groupe alkyle, un groupe alcényle ou un groupe phényle, et n est 1, 2, 3, 4, ou 5.

2. Composition de revêtement selon la revendication 1, dans lequel l'agent (B) de durcissement à base d'amine liquide inclut au moins un composé sélectionné parmi l'amine poly (cyclohexyle-aromatique) réticulée par méthylène, le 4,4'-méthylènebis (cyclohexylamine) et les produits modifiés par Mannich de m-xylylènediamine.

3. Composition de revêtement selon la revendication 1 ou la revendication 2, dans laquelle la teneur du dérivé (C) de dioxolane est de 1 à 14 % en masse sur la base de 100 % en masse de teneur non volatile dans la composition de revêtement.

4. Composition de revêtement selon l'une quelconque des revendications 1 à 3, dans laquelle la teneur du dérivé (C) de dioxolane est de 0,1 à 1,4 partie en masse sur la base d'une partie en masse de teneur de l'agent (B) de durcissement à base d'amine liquide.

5. Composition de revêtement selon l'une quelconque des revendications 1 à 4, dans lequel la teneur en COV est de 200 g/L ou moins, déterminée comme indiqué dans la spécification.

6. Composition de revêtement selon l'une quelconque des revendications 1 à 5, comprenant en outre un diluant réactif autre que le composé (A) époxy.

7. Film de revêtement formé à partir de la composition de revêtement selon l'une quelconque des revendications 1 à 6.

8. Procédé de production d'un film de revêtement, comprenant une étape de séchage de la composition de revêtement selon l'une quelconque des revendications 1 à 6 à une température de 10 °C ou moins pour former un film de revêtement.

9. Substrat avec un film de revêtement comprenant le film de revêtement selon la revendication 7 et un substrat.

10. Procédé de production d'un substrat avec un film de revêtement, comprenant les étapes [1] et [2] suivantes :
l'étape [1] d'application de la composition de revêtement selon l'une quelconque des revendications 1 à 6 sur un substrat ; et
l'étape [2] de séchage de la composition de revêtement appliquée pour former un film de revêtement.

11. Substrat avec un procédé de production de film de revêtement selon la revendication 10, dans lequel l'étape [2] est une étape de séchage de la composition de revêtement appliquée à une température de 10 °C ou moins pour former un film de revêtement.
